# EUROPEAN PATENT APPLICATION

(11) **EP 4 390 514 A1**
(43) Date of publication of application: **26.06.2024**
(21) Application number: 22858346.4
(22) Date of filing: 05.08.2022
(51) Int. Cl.: G02B 30/56

(54) **AERIAL IMAGE DISPLAY DEVICE**

(30) Priority: 20.08.2021 JP 2021135176
(71) Applicant: Kyocera Corporation, Kyoto-shi Kyoto 612-8501 (JP)
(72) Inventor: KAWANISHI, Hiroyoshi, Kyoto-shi, Kyoto 612-8501 (JP); SHIMOSE, Kazuki, Kyoto-shi, Kyoto 612-8501 (JP); KUSAFUKA, Kaoru, Kyoto-shi, Kyoto 612-8501 (JP); HASHIMOTO, Sunao, Kyoto-shi, Kyoto 612-8501 (JP)
(74) Representative: TBK
(86) International application number: PCT/JP2022/030113
(87) International publication number: WO 2023/022025

(57) **Abstract**

An aerial image display device includes a display, an imaging optical system including a freeform mirror including first and second portions, and a drive. The freeform mirror reflects light incident on the first portion with a first object focal point and light incident on the second portion with a second object focal point having a shorter focal length than the first object focal point. A first positioning is relative positioning of the display and the freeform mirror with the display closer to the freeform mirror than the first object focal point to display a virtual image in air. A second positioning is the relative positioning of the display and the freeform mirror with the display farther from the freeform mirror than the second object focal point to display a real image in air. The drive changes a spatial position of the display from the first to second or second to first positioning.

## Description

### TECHNICAL FIELD

The present disclosure relates to an aerial image display device.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2011-253128

### SUMMARY

In one embodiment of the present disclosure, an aerial image display device includes a display that displays an image with traveling image light, an imaging optical system including one or more optical elements to receive the traveling image light as incident light and having a first object focal point and a second object focal point with a shorter focal length than the first object focal point, and a drive that changes positional relationship between the first object focal point and the display relative to each other or between the second object focal point and the display relative to each other. The drive switches between a first positioning and a second positioning. The first positioning is positioning with the display located closer to the imaging optical system than the first object focal point of the imaging optical system to display a virtual image in air. The second positioning is positioning with the display located farther from the imaging optical system than the second object focal point of the imaging optical system to display a real image in air.

### BRIEF DESCRIPTION OF THE DRAWINGS

The objects, features, and advantages of the present disclosure will become more apparent from the following detailed description and the drawings.
FIG. 1 is a schematic diagram of an aerial image display device according to a first embodiment illustrating its structure.
FIG. 2 is a schematic diagram of the aerial image display device according to the first embodiment illustrating its operation example.
FIG. 3 is a schematic diagram of an aerial image display device according to a second embodiment illustrating its structure and operation example.
FIG. 4 is a schematic diagram of an aerial image display device according to a third embodiment illustrating its structure and operation example.
FIG. 5 is a schematic diagram of an aerial image display device according to a fourth embodiment illustrating its structure and operation example.
FIG. 6 is a schematic diagram of an aerial image display device according to a fifth embodiment illustrating its structure and operation example.
FIG. 7 is a schematic diagram of an aerial image display device according to a sixth embodiment illustrating its structure and operation example.
FIG. 8 is a schematic diagram of an aerial image display device according to a seventh embodiment illustrating its structure and operation example.

### DESCRIPTION OF EMBODIMENTS

An aerial image display device with the structure that forms the basis of an aerial image display device according to one or more embodiments of the present disclosure will now be described.

A known display device described in Patent Literature 1 forms an aerial image from light emitted from a display using an optical element such as a retroreflector.

For example, a display that displays a real image in the air and a display that displays a virtual image in the air may be used to display an image as a real image and a virtual image in a manner switching between them. This structure thus includes two displays.

One or more aspects of the present disclosure are directed to an aerial image display device that can display a real image and a virtual image in the air.

One or more embodiments of the present disclosure will now be described with reference to the drawings. The drawings used herein are schematic and are not drawn to scale relative to the actual size of each component.

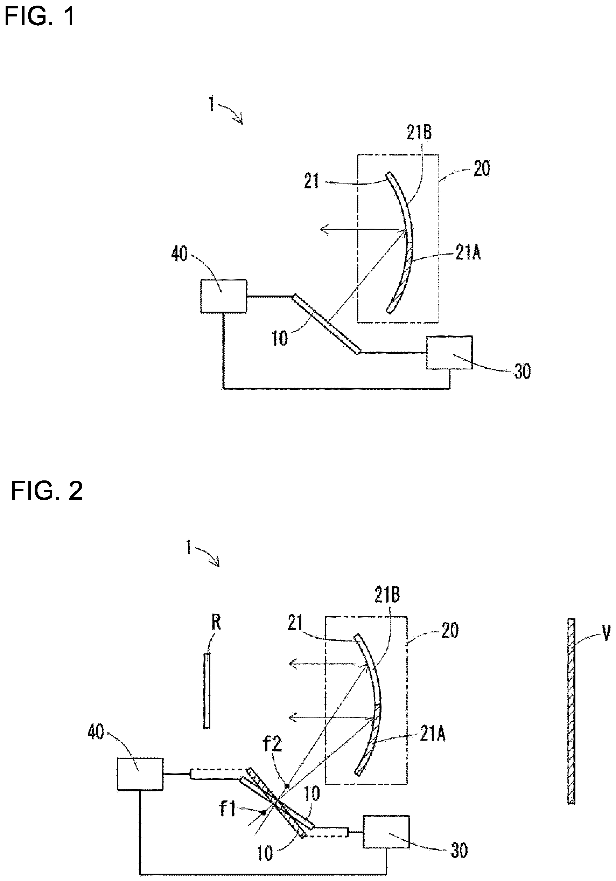

FIG. 1 is a schematic diagram of an aerial image display device according to a first embodiment illustrating its structure. An aerial image display device 1 includes a display 10, an imaging optical system 20, and a drive 30. The aerial image display device 1 may include an internal controller 40. The aerial image display device 1 may also be controlled by an external controller 40.

The display 10 displays an image using traveling image light. The controller 40 changes the image to be displayed on the display 10. The display 10 may be a transmissive display or a self-luminous display. For example, the transmissive display may be a liquid crystal display. For example, the self-luminous display may be a display including a self-luminous element such as a light-emitting diode (LED) element, an organic electroluminescent (OEL) element, an organic LED (OLED) element, or a semiconductor laser diode (LD) element, or a digital micromirror device (DMD).

The imaging optical system 20 receives image light as incident light. The imaging optical system 20 includes one or more optical elements. The imaging optical system 20 may be a reflective optical system including an optical element that is a light-reflecting member, such as a reflective mirror. The imaging optical system 20 may be a catadioptric optical system including an optical element that is a light-reflecting member, such as a reflective mirror, and a member that refracts light, such as a lens. The imaging optical system 20 may be a reflective or catadioptric optical system that is a coaxial optical system. The imaging optical system 20 may be a reflective or catadioptric optical system that is a non-coaxial optical system. The non-coaxial optical system may be, for example, a decentered optical system, or may be an off-axial optical system.

The imaging optical system 20 includes the display 10 as a light source. The imaging optical system 20 includes an object space containing the display 10 and an image space opposite to the object space. The imaging optical system 20 includes an object focal point as a focal point in the object space, and an image focal point as a focal point in the image space. In the present embodiment, the imaging optical system 20 has a first object focal point with a relatively long focal length and a second object focal point with a relatively short focal length. The imaging optical system 20 may use, for example, a freeform mirror 21 as an optical element. In the present embodiment, the freeform mirror 21 includes a first portion 21A and a second portion 21B. The first portion 21A of the freeform mirror 21 includes a focal point as a first object focal point f1. The freeform mirror 21 reflects light incident on the first portion 21A with a focal point at the first object focal point f1. The second portion 21B of the freeform mirror 21 includes a focal point as a second object focal point f2. The freeform mirror 21 reflects light incident on the second portion 21B with a focal point at the second object focal point f2. The first object focal point f1 has a longer focal length than the second object focal point f2. The second object focal point f2 has a shorter focal length than the first object focal point f1.

FIG. 2 is a schematic diagram of the aerial image display device according to the first embodiment illustrating its operation example. In the present embodiment, for example, the imaging optical system 20 includes an optical element that is a single freeform mirror 21. When the display 10 is located closer to the imaging optical system 20 than the first object focal point f1 of the imaging optical system 20, a virtual image V corresponding to image light is displayed in the air in the image space as an image corresponding to the display 10. The relative positioning of the display 10 and the freeform mirror 21 with the display 10 located closer to the freeform mirror 21 than the first object focal point f1 to display a virtual image V in the air is referred to as first positioning. The first positioning indicating the positional relationship between the display 10 and the object focal point f of the imaging optical system 20 is relative positioning to display a virtual image V in the air. When the display 10 is located farther from the imaging optical system 20 than the second object focal point f2 of the imaging optical system 20, a real image R corresponding to the image light is displayed in the air in the image space as an image corresponding to the display 10. The relative positioning of the display 10 and the freeform mirror 21 with the display 10 located farther from the freeform mirror 21 than the second object focal point f2 to display a real image R in the air is referred to as second positioning. The second positioning indicating the positional relationship between the display 10 and the object focal point f of the imaging optical system 20 is relative positioning to display a real image R in the air. The first positioning and the second positioning may be referred to as first relative positioning and second relative positioning.

The drive 30 changes the positional relationship between the focal point of the imaging optical system 20 and the display 10 relative to each other. The drive 30 changes the positions of the display 10 and the imaging optical system 20 relative to each other. The drive 30 changes, for example, the position of at least the display 10 or at least one of the optical elements in the imaging optical system 20 to change their relative positions. The drive 30 may change, for example, the positions of all optical elements in the imaging optical system 20 to change their positions relative to the display 10. The drive 30 may change, for example, the positions of one or more optical elements in the imaging optical system 20 to change the positional relationship between the focal point of the imaging optical system 20 and the display 10 relative to each other.

The controller 40 controls the display 10, and may be, for example, a processor. The controller 40 may include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 40 may be either a system on a chip (SoC) or a system in a package (SiP) in which one or more processors cooperate with other components. The controller 40 may control the operation of the drive 30. The controller 40 may function as a controller for controlling the operation of the drive 30. The function of the controller for controlling the operation of the drive 30 may be a motor driver for controlling a drive motor. A controller other than the controller 40 may control the operation of the drive 30. The controller other than the controller 40 may be an integrated circuit (IC) for motor control.

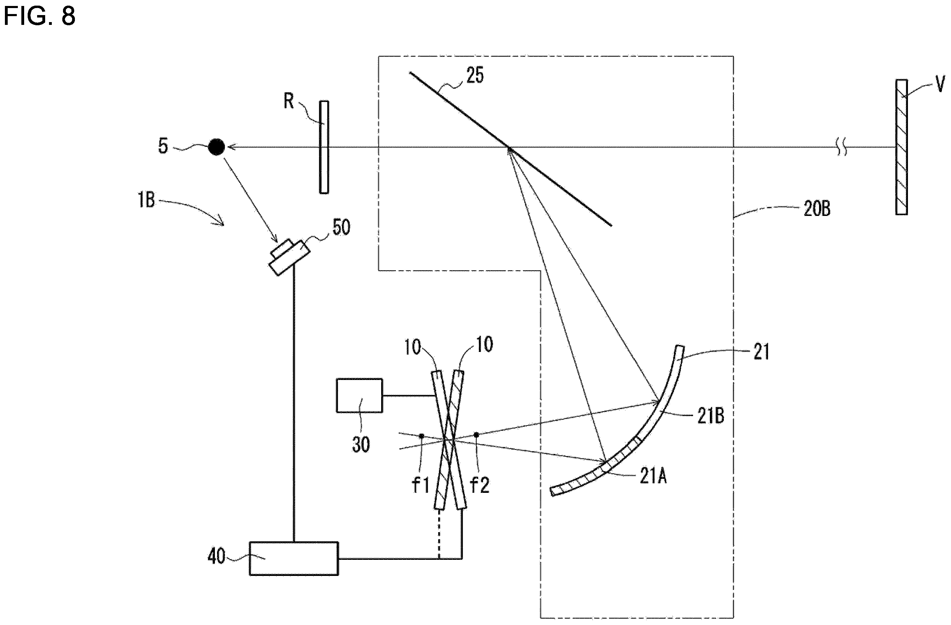

The controller 40 may perform control to enlarge the image (also referred to as a virtual-use image) to be displayed on the display 10 for displaying a virtual image V in the air relative to the image (also referred to as a real-use image) to be displayed on the display 10 for displaying a real image R in the air. In this case, the virtual image V is formed behind the freeform mirror 21 as viewed from the user. Thus, the virtual image V is located farther from the user than the real image R displayed in the air. The virtual image V is thus less viewable to the user than the real image R. In addition, viewing the virtual image V through the semi-transmissive freeform mirror 21 or a windshield 25 (illustrated in FIG. 8) of a transport vehicle further causes the virtual image V to be less viewable to the user than the real image R. The above control reduces the likelihood of the virtual image V being less viewable to the user than the real image R. The ratio of enlargement of the virtual-use image to the real-use image may be, but not limited to, more than one time and about three times or less.

The controller 40 may perform control to cause the luminance of the image to be displayed on the display 10 for displaying a virtual image V in the air to be higher than the luminance of the image to be displayed on the display 10 for displaying a real image R in the air. This also reduces the likelihood of the virtual image V being less viewable to the user than the real image R. The luminance of the virtual-use image may be, but not limited to, more than one time and about ten times or less the luminance of the real-use image.

The controller 40 may perform control to cause the contrast of the image to be displayed on the display 10 for displaying a virtual image V in the air to be higher than the contrast of the image to be displayed on the display 10 for displaying a real image R in the air. This also reduces the likelihood of the virtual image V being less viewable to the user than the real image R. The contrast of the virtual-use image may be, but not limited to, more than one time and about twice or less the contrast of the real-use image.

The controller 40 may perform control to cause the frame frequency of the image to be displayed on the display 10 for displaying a virtual image V in the air to be higher than the frame frequency of the image to be displayed on the display 10 for displaying a real image R in the air. This also reduces the likelihood of the virtual image V being less viewable to the user than the real image R. The frame frequency of the virtual-use image may be, but not limited to, more than one time and about eight times or less the frame frequency of the real-use image. For example, when the frame frequency of the real-use image is 30 Hz, the frame frequency of the virtual-use image may be higher than 30 Hz and about 240 Hz or lower.

In the present embodiment, the drive 30 can control shifts from the first positioning to the second positioning and from the second positioning to the first positioning by, for example, changing the spatial position of the display 10. The movements of the display 10 in the present embodiment are rotational. For example, the display 10 includes a rotational shaft at its center, and the display 10 is rotated about the shaft. The direction of image light emitted from the display 10 can thus be changed. In the present embodiment, the position of the freeform mirror 21 may be fixed. The drive 30 may have any structure that allows the display 10 to move between a first spatial position corresponding to the first positioning and a second spatial position corresponding to the second positioning from one position to the other. Examples of such a structure include an electric slider and an electric cylinder controlled by, for example, a servo motor. The drive 30 may stop the display 10 at two positions that are the first spatial position and the second spatial position. The drive 30 may stop the display 10 at the two positions, or the first spatial position and the second spatial position, or at any position between the first spatial position and the second spatial position.

In one or more embodiments of the present disclosure, the first spatial position is a spatial position corresponding to the first positioning, and the second spatial position is a spatial position corresponding to the second positioning. The first spatial position and the second spatial position may indicate the spatial positions of one or more components, which may vary between embodiments. For example, the first spatial position and the second spatial position may indicate the spatial positions of the display 10, the imaging optical system 20, and one or more optical elements in the imaging optical system 20.

When the display 10 is rotated to the first spatial position, the first portion 21A of the freeform mirror 21 reflects image light. The display 10 is located closer to the freeform mirror 21 than the first object focal point f1. When the display 10 is rotated to the second spatial position, the second portion 21B of the freeform mirror 21 reflects image light. The display 10 is located farther from the freeform mirror 21 than the second object focal point f2.

The user of the aerial image display device 1 can view a virtual image V when the display 10 is at the first spatial position, and can view a real image R when the display 10 is at the second spatial position. In the present embodiment, the aerial image display device 1 can thus display a real image R and a virtual image V in the air as the drive 30 changes the positions of the display 10 and the optical element relative to each other.

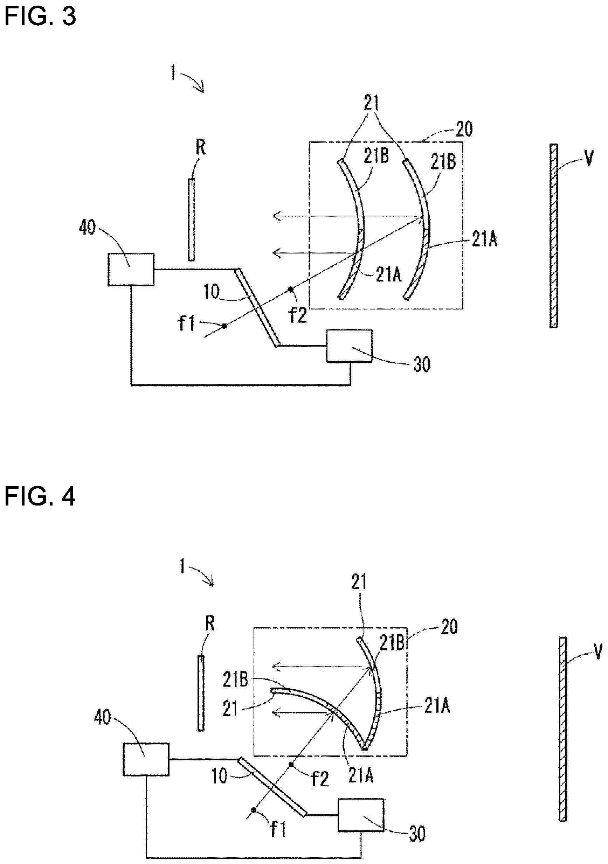

FIG. 3 is a schematic diagram of an aerial image display device according to a second embodiment illustrating its structure and operation example. In the present embodiment, as in the first embodiment, the imaging optical system 20 in the aerial image display device 1 includes an optical element that is a freeform mirror 21. In the present embodiment, the drive 30 can control shifts from the first positioning to the second positioning and from the second positioning to the first positioning by, for example, changing the spatial position of the freeform mirror 21. In the present embodiment, the drive 30 can move the freeform mirror 21 to the first spatial position and to the second spatial position. The movements of the freeform mirror 21 in the present embodiment are translational. In the present embodiment, the position of the display 10 may be fixed. The drive 30 may have any structure that allows the freeform mirror 21 to move between the first spatial position and the second spatial position from one position to the other. Examples of such a structure include an electric slider and an electric cylinder. The drive 30 may stop the freeform mirror 21 at two positions that are the first spatial position and the second spatial position. The drive 30 may stop the freeform mirror 21 at the two positions, or the first spatial position and the second spatial position, or at any position between the first spatial position and the second spatial position.

When the freeform mirror 21 is translated to the first spatial position, the first portion 21A of the freeform mirror 21 reflects image light. The display 10 is located closer to the freeform mirror 21 than the first object focal point f1. When the freeform mirror 21 is translated to the second spatial position, the second portion 21B of the freeform mirror 21 reflects image light. The display 10 is located farther from the freeform mirror 21 than the second object focal point f2.

The user of the aerial image display device 1 can view a virtual image V when the freeform mirror 21 is at the first spatial position, and can view a real image R when the freeform mirror 21 is at the second spatial position. In the present embodiment, the aerial image display device 1 can thus display a real image R and a virtual image V in the air as the drive 30 changes the positions of the display 10 and the optical element relative to each other.

A real image R and a virtual image V viewable to the user may be the same or different images. For different images, the controller 40 displays an image to be viewed by the user as a virtual image V when the display 10 or the optical element is at the first positioning, and displays an image to be viewed by the user as a real image R when the display 10 or the optical element is at the second positioning. Thus, the user receives different information from the real image R and the virtual image V displayed in the air.

The real image R is an inverted image and the virtual image V is an erect image. Thus, the controller 40 switches, for example, the up-down orientation of the image to be displayed on the display 10 between orientation for the first positioning and the orientation for the second positioning. The controller 40 reads, for example, an image with a different up-down orientation from a storage and causes the image to be displayed on the display 10. Thus, when the real image R and the virtual image V are switched between them, the user can view the image displayed in the correct up-down orientation in the air.

When a displayed image is distorted, the display 10 may display an image with correction to reduce such distortion caused by an optical element. The distortion may be corrected using, for example, predefined distortion correction tables. With the real image R being an inverted image and the virtual image V being an erect image, the distortion correction tables may include a real image correction table and a virtual image correction table. The controller 40 may switch, for example, the distortion correction table between the distortion correction table for the first positioning and the distortion correction table for the second positioning. The controller 40 may use, for example, different distortion correction tables for the first positioning and for the second positioning. Thus, the aerial image display device 1 switching between a real image R and a virtual image V can provide images corrected for distortion to the user.

FIG. 4 is a schematic diagram of an aerial image display device according to a third embodiment illustrating its structure and operation example. In the present embodiment, as in the first embodiment, the imaging optical system 20 in the aerial image display device 1 includes an optical element that is a freeform mirror 21. In the present embodiment, the drive 30 can control shifts from the first positioning to the second positioning and from the second positioning to the first positioning by, for example, changing the spatial position of the freeform mirror 21. In the present embodiment, the drive 30 can move the freeform mirror 21 to the first spatial position and to the second spatial position. The movements of the freeform mirror 21 in the present embodiment are rotational. For example, the freeform mirror 21 includes a rotational shaft at its one end, and the freeform mirror 21 is rotated about the shaft. In the present embodiment, the position of the display 10 may be fixed. The drive 30 may have any structure that allows the freeform mirror 21 to move between the first spatial position and the second spatial position from one position to the other. Examples of such a structure include an electric slider and an electric cylinder. The drive 30 may stop the freeform mirror 21 at two positions that are the first spatial position and the second spatial position. The drive 30 may stop the freeform mirror 21 at the two positions, or the first spatial position and the second spatial position, or at any position between the first spatial position and the second spatial position.

When the freeform mirror 21 is rotated to the first spatial position, the first portion 21A of the freeform mirror 21 reflects image light. The display 10 is located closer to the freeform mirror 21 than the first object focal point f1. When the freeform mirror 21 is rotated to the second spatial position, the second portion 21B of the freeform mirror 21 reflects image light. The display 10 is located farther from the freeform mirror 21 than the second object focal point f2.

The user of the aerial image display device 1 can view a virtual image V when the freeform mirror 21 is at the first spatial position, and can view a real image R when the freeform mirror 21 is at the second spatial position. In the present embodiment, the aerial image display device 1 can thus display a real image R and a virtual image V in the air as the drive 30 changes the positions of the display 10 and the optical element relative to each other.

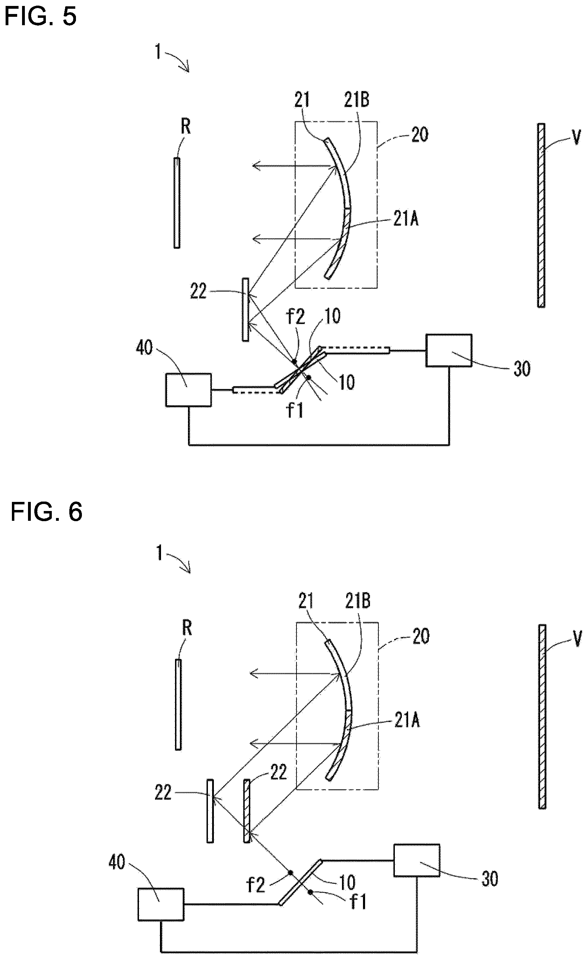

FIG. 5 is a schematic diagram of an aerial image display device according to a fourth embodiment illustrating its structure and operation example. In the present embodiment, the imaging optical system 20 in the aerial image display device 1 includes optical elements that are a freeform mirror 21 and a plane mirror 22. In the present embodiment, the drive 30 can control shifts from the first positioning to the second positioning and from the second positioning to the first positioning by, for example, changing the spatial position of the display 10. In the present embodiment, the drive 30 can move the freeform mirror 21 to the first spatial position and to the second spatial position. The movements of the display 10 in the present embodiment are rotational. In the present embodiment, the positions of the freeform mirror 21 and the plane mirror 22 may be fixed. The drive 30 may have any structure that allows the display 10 to move between the first spatial position and the second spatial position from one position to the other. Examples of such a structure include an electric slider and an electric cylinder. The drive 30 may stop the display 10 at two positions that are the first spatial position and the second spatial position. The drive 30 may stop the display 10 at the two positions, or the first spatial position and the second spatial position, or at any position between the first spatial position and the second spatial position.

When the display 10 is rotated to the first spatial position, the plane mirror 22 reflects image light. The first portion 21A of the freeform mirror 21 reflects image light reflected from the plane mirror 22. The display 10 is located closer to the optical elements than the first object focal point f1. When the display 10 is rotated to the second spatial position, the plane mirror 22 reflects image light. The second portion 21B of the freeform mirror 21 reflects image light reflected from the plane mirror 22. The display 10 is located farther from the optical elements than the second object focal point f2.

The user of the aerial image display device 1 can view a virtual image V when the display 10 is at the first spatial position, and can view a real image R when the display 10 is at the second spatial position. In the present embodiment, the aerial image display device 1 can thus display a real image R and a virtual image V in the air as the drive 30 changes the positions of the display 10 and the optical elements relative to one another.

FIG. 6 is a schematic diagram of an aerial image display device according to a fifth embodiment illustrating its structure and operation example. In the present embodiment, the imaging optical system 20 in the aerial image display device 1 includes optical elements that are a freeform mirror 21 and a plane mirror 22. In the present embodiment, the drive 30 can control shifts from the first positioning to the second positioning and from the second positioning to the first positioning by, for example, changing the spatial position of the plane mirror 22. In the present embodiment, the drive 30 can move the plane mirror 22 to the first spatial position and to the second spatial position. The movements of the plane mirror 22 in the present embodiment are translational. In the present embodiment, the position of the display 10 may be fixed. The Drive 30 may have any structure that allows the plane mirror 22 to move between the first spatial position and the second spatial position from one position to the other. Examples of such a structure include an electric slider and an electric cylinder. The drive 30 may stop the plane mirror 22 at two positions that are the first spatial position and the second spatial position. The drive 30 may stop the plane mirror 22 at the two positions, or the first spatial position and the second spatial position, or at any position between the first spatial position and the second spatial position.

When the display 10 is translated to the first spatial position, the plane mirror 22 reflects image light. The first portion 21A of the freeform mirror 21 reflects image light reflected from the plane mirror 22. The display 10 is located closer to the optical elements than the first object focal point f1. When the display 10 is translated to the second spatial position, the plane mirror 22 reflects image light. The second portion 21B of the freeform mirror 21 reflects image light reflected from the plane mirror 22. The display 10 is located farther from the optical elements than the second object focal point f2.

The user of the aerial image display device 1 can view a virtual image V when the plane mirror 22 is at the first spatial position, and can view a real image R when the plane mirror 22 is at the second spatial position. In the present embodiment, the aerial image display device 1 can thus display a real image R and a virtual image V in the air as the drive 30 changes the positions of the display 10 and the optical elements relative to one another.

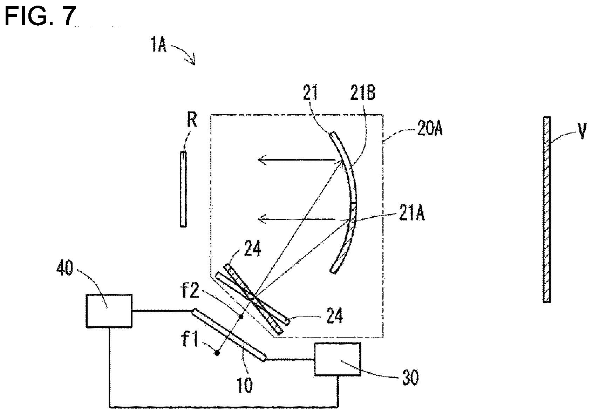

FIG. 7 is a schematic diagram of an aerial image display device according to a sixth embodiment illustrating its structure and operation example. In the present embodiment, an imaging optical system 20Ain an aerial image display device 1A includes optical elements that are a freeform mirror 21 and a lens 24. The lens 24 may be, for example, a convex lens, a Fresnel lens, or a liquid crystal lens. An imaging optical system 20A in the present embodiment is a catadioptric optical system. In the present embodiment, the drive 30 can control shifts from the first positioning to the second positioning and from the second positioning to the first positioning by, for example, changing the spatial position of the lens 24. In the present embodiment, the drive 30 can move the lens 24 to the first spatial position and to the second spatial position. The movements of the lens 24 in the present embodiment are rotational. In the present embodiment, the position of the display 10 may be fixed. The drive 30 may have any structure that allows the lens 24 to move between the first spatial position and the second spatial position from one position to the other. Examples of such a structure include an electric slider and an electric cylinder. The drive 30 may stop the lens 24 at two positions that are the first spatial position and the second spatial position. The drive 30 may stop the lens 24 at the two positions, or the first spatial position and the second spatial position, or at any position between the first spatial position and the second spatial position.

The user of the aerial image display device 1 can view a virtual image V when the lens 24 is at the first spatial position, and can view a real image R when the lens 24 is at the second spatial position. In the present embodiment, the aerial image display device 1 can thus display a real image R and a virtual image V in the air as the drive 30 changes the positions of the display 10 and the optical elements relative to one another.

When the imaging optical system 20A is a catadioptric optical system, as in the present embodiment, the lens 24 may be changed instead of moving the lens 24. For example, the drive 30 may move two lenses 24 with different lens characteristics to change between these lenses 24. The drive 30 may change the lens 24 to change the position of the freeform mirror 21 on which the image light is incident. Thus, the drive 30 can switch between the first positioning in which the display 10 is located closer to the imaging optical system 20A than the first object focal point f1 and the second positioning in which the display 10 is located farther from the imaging optical system 20A than the second object focal point f2.

FIG. 8 is a schematic diagram of an aerial image display device according to a seventh embodiment illustrating its structure and operation example. In the present embodiment, an aerial image display device 1B is mounted on a movable body. The aerial image display device 1B includes a display 10, an imaging optical system 20B, a drive 30, a controller 40, and a camera 50. The aerial image display device 1B may be at any position inside or outside the movable body. The aerial image display device 1B may be installed, for example, inside a dashboard in the movable body.

In one or more embodiments of the present disclosure, examples of the movable body include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle include a human-powered vehicle. The classification of the vehicle is not limited to the above examples. Examples of the automobile include an industrial vehicle travelling on a road. One type of vehicle may fall within multiple classes. Examples of the vessel include a jet ski, a boat, and a tanker. Examples of the aircraft include a fixed-wing aircraft and a rotary-wing aircraft. In the example described below, the movable body includes a windshield 25. The movable body may be any of the above examples including a combiner in place of the windshield 25.

The camera 50 is installed on the movable body. The camera 50 captures an image of a space expected to include, for example, the face, or the upper body of the driver or a user of the movable body. The camera 50 may be installed at any position inside or outside the movable body. The camera 50 may be installed, for example, inside or on a dashboard in the movable body. The camera 50 may be installed, for example, inside another device such as an air duct.

The camera 50 may be an infrared camera that receives infrared light and generates images. The camera 50 may function both as an infrared camera and a visible light camera. The camera 50 may include, for example, a charge-coupled device (CCD) image sensor or a complementary metal-oxide-semiconductor (CMOS) image sensor.

The camera 50 outputs a captured image to the controller 40. The camera 50 may output a captured image to the controller 40 through wired communication or wireless communication. The wired communication may include, for example, communication using a controller area network (CAN). The controller 40 may detect the position of eyes 5 of the user based on the captured image output from the camera 50. The controller 40 changes the image to be displayed on the display 10 based on the detected position of the eyes 5 of the user.

In the present embodiment, the imaging optical system 20B in the aerial image display device 1B includes optical elements that are a freeform mirror 21 and a windshield 25. The image light emitted from the display 10 is reflected from the freeform mirror (concave mirror) 21, reaches the windshield 25, and is then reflected from the windshield 25 to reach the eyes 5 of the user. The user can thus view an aerial image.

In the present embodiment, the drive 30 can control shifts from the first positioning to the second positioning and from the second positioning to the first positioning by, for example, changing the spatial position of the display 10. In the present embodiment, the drive 30 can move the display 10 to the first spatial position and to the second spatial position. The movements of the display 10 in the present embodiment are rotational. In the present embodiment, the position of the freeform mirror 21 may be fixed. The drive 30 may have any structure that allows the display 10 to move between the first spatial position and the second spatial position from one position to the other. Examples of such a structure include an electric slider and an electric cylinder. The drive 30 may stop the display 10 at two positions that are the first spatial position and the second spatial position. The drive 30 may stop the display 10 at the two positions, or the first spatial position and the second spatial position, or at any position between the first spatial position and the second spatial position.

When the display 10 is rotated to the first spatial position, the first portion 21A of the freeform mirror 21 reflects image light. The windshield 25 reflects image light reflected from the first portion 21A. The display 10 is located closer to the freeform mirror 21 than the first object focal point f1. When the display 10 is rotated to the second spatial position, the second portion 21B of the freeform mirror 21 reflects image light. The windshield 25 reflects image light reflected from the second portion 21B. The display 10 is located farther from the freeform mirror 21 than the second object focal point f2.

The user of the aerial image display device 1 can view a virtual image V with the image light reflected from the windshield 25 when the display 10 is at the first spatial position, and can view a real image R with the image light reflected from the windshield 25 when the display 10 is at the second spatial position. In the present embodiment, the aerial image display device 1B can thus display a real image R and a virtual image V in the air as the drive 30 changes the positions of the display 10 and the optical elements relative to one another.

The controller 40 may control the drive 30 based on the position of the eyes 5 of the user. The controller 40 may move the display 10 based on the position of the eyes 5 of the user to switch the aerial display between a real image R and a virtual image V The controller 40 may also control the drive 30 based on, for example, the operating state (e.g., being stopped or being traveling) of the movable body. The controller 40 may move the display 10 based on the operating state of the movable body to switch the aerial display between a real image R and a virtual image V

In a variation of a tenth embodiment, the display 10 may be fixed, and the position of the freeform mirror 21 may be shifted between the first positioning and the second positioning to switch the aerial display between a real image R and a virtual image V

Upon switching from a real image R to a virtual image V or from a virtual image V to a real image R, the eyes 5 of the user may fail to respond to the switch. The user may take time before viewing the new image, or feel discomfort from visually induced motion sickness. The controller 40 may cause, for example, the display 10 to display a black image when switching the image to be displayed on the display 10 between an image for display as a real image R and an image for display as a virtual image V Ablack image is displayed to reduce the likelihood of the viewability being lowered, and thus reduce discomfort.

The aerial image display device 1B may be in other embodiments described below. The camera 50 may capture an image of the user to obtain an image of the pupils of the eyes 5 of the user. The controller 40 may perform control to enlarge the image to be displayed on the display 10 when the pupils enlarge. When the pupils of the user enlarge, the user gazes at the image or a part of the image. Enlarging the image to be displayed on the display 10 allows the user to view the image or a part of the image more easily. This allows the user aboard a transport vehicle to avoid unsafe situations more easily. The ratio of enlargement of the image may be, but not limited to, more than one time and about three times or less. A part of the image being gazed at by the user may be detected, and the part of the image being gazed at by the user may be enlarged.

The camera 50 may capture an image of the user to obtain an image of the pupils of the eyes 5 of the user. The controller 40 may perform control to increase the luminance of the image to be displayed on the display 10 when the pupils enlarge. This produces the same or similar advantageous effects as described above, allowing the user aboard a transport vehicle to avoid unsafe situations more easily. The luminance of the image may be increased by a factor of, but not limited to, more than one and about ten or less. A part of the image being gazed at by the user may be detected, and the luminance may be increased in the part of the image being gazed at by the user.

The camera 50 may capture an image of the user to obtain an image of the pupils of the eyes 5 of the user. The controller 40 may perform control to increase the contrast of the image to be displayed on the display 10 when the pupils enlarge. This produces the same or similar advantageous effects as described above, allowing the user aboard a transport vehicle to avoid unsafe situations more easily. The contrast of the image may be increased by a factor of, but not limited to, more than one and about two or less. A part of the image being gazed at by the user may be detected and the contrast may be increased in the part of the image being gazed at by the user.

The camera 50 may capture an image of the user to obtain an image of the pupils of the eyes 5 of the user. The controller 40 may perform control to increase the frame frequency of the image to be displayed on the display 10 when the pupils enlarge. This produces the same or similar advantageous effects as described above, allowing the user aboard a transport vehicle to avoid unsafe situations more easily. The frame frequency of the image may be increased by a factor of, but not limited to, more than one and about eight or less.

In one or more embodiments of the present disclosure, first, second, or others are identifiers for distinguishing the components. The identifiers of the components distinguished with first, second, and others in the present disclosure are interchangeable. For example, the first reflective element is interchangeable with the second reflective element. The identifiers are to be interchanged together. The components for which the identifiers are interchanged are also to be distinguished from one another. The identifiers may be eliminated. The components without such identifiers can be distinguished with reference numerals. The identifiers such as first and second in the present disclosure alone should not be used to determine the order of components or to suggest the existence of smaller number identifiers.

The aerial image display device according to one or more embodiments of the present disclosure may be implemented in forms 1 to 15 described below.
(1) An aerial image display device, comprising:
   a display configured to display an image with traveling image light;
   an imaging optical system including one or more optical elements, the imaging optical system being configured to receive the traveling image light as incident light, the imaging optical system having a first object focal point and a second object focal point with a shorter focal length than the first object focal point; and
   a drive configured to change positional relationship between the first object focal point and the display relative to each other or between the second object focal point and the display relative to each other, the drive being configured to switch between first positioning and second positioning, the first positioning being positioning with the display located closer to the imaging optical system than the first object focal point of the imaging optical system to display a virtual image in air, the second positioning being positioning with the display located farther from the imaging optical system than the second object focal point of the imaging optical system to display a real image in air.
(2) The aerial image display device according to (1), wherein
   the imaging optical system is a reflective optical system or a catadioptric optical system.
(3) The aerial image display device according to (2), wherein
   the optical element is a freeform mirror, and
   the imaging optical system switches between the first object focal point and the second object focal point in response to a position of the freeform mirror on which the traveling image light is incident.
(4) The aerial image display device according to any one of (1) to (3), further comprising:
   a controller configured to change an image to be displayed on the display.
(5) The aerial image display device according to (4), wherein
   the controller switches an up-down orientation of an image to be displayed on the display between an up-down orientation for the first positioning and an up-down orientation for the second positioning.
(6) The aerial image display device according to (4) or (5), wherein
   the controller switches a distortion correction table for an image to be displayed on the display between a distortion correction table for the first positioning and a distortion correction table for the second positioning.
(7) The aerial image display device according to (4), wherein
   the controller performs control to enlarge an image to be displayed on the display for displaying a virtual image in air relative to an image to be displayed on the display for displaying a real image in air.
(8) The aerial image display device according to (4), wherein
   the controller performs control to cause luminance of an image to be displayed on the display for displaying a virtual image in air to be higher than luminance of an image to be displayed on the display for displaying a real image in air.
(9) The aerial image display device according to (4), wherein
   the controller performs control to cause a contrast of an image to be displayed on the display for displaying a virtual image in air to be higher than a contrast of an image to be displayed on the display for displaying a real image in air.
(10) The aerial image display device according to (4), wherein
   the controller performs control to cause a frame frequency of an image to be displayed on the display for displaying a virtual image in air to be higher than a frame frequency of an image to be displayed on the display for displaying a real image in air.
(11) The aerial image display device according to any one of (1) to (10), further comprising:
   a camera configured to capture an image of a user,
   wherein the controller changes an image to be displayed on the display based on a position of an eye of the user.
(12) The aerial image display device according to (11), wherein
   the camera captures an image of the user to obtain an image of a pupil of the eye of the user, and
   the controller enlarges an image to be displayed on the display when the pupil enlarges.
(13) The aerial image display device according to (11) or (12), wherein
   the camera captures an image of the user to obtain an image of a pupil of the eye of the user, and
   the controller increases luminance of an image to be displayed on the display when the pupil enlarges.
(14) The aerial image display device according to any one of (11) to (13), wherein
   the camera captures an image of the user to obtain an image of a pupil of the eye of the user, and
   the controller increases a contrast of an image to be displayed on the display when the pupil enlarges.
(15) The aerial image display device according to any one of (11) to (14), wherein
   the camera captures an image of the user to obtain an image of a pupil of the eye of the user, and
   the controller increases a frame frequency of an image to be displayed on the display when the pupil enlarges.

The aerial image display device according to one embodiment of the present disclosure can display a real image and a virtual image in the air.

The present disclosure may be embodied in various forms without departing from the spirit or the main features of the present disclosure. The embodiments described above are thus merely illustrative in all respects. The scope of the present disclosure is defined not by the description given above but by the claims. Any variations and alterations contained in the claims fall within the scope of the present disclosure.

### REFERENCE SIGNS

1, 1A, 1B aerial image display device
5 eye
10 display
20, 20A, 20B imaging optical system
21 freeform mirror
21A first portion
21B second portion
22 plane mirror
24 lens
25 windshield
30 drive
40 controller
50 camera
R real image
V virtual image
f1 first object focal point
f2 second object focal point

## Claims

1. An aerial image display device, comprising:
a display configured to display an image with traveling image light;
an imaging optical system including one or more optical elements, the imaging optical system being configured to receive the traveling image light as incident light, the imaging optical system having a first object focal point and a second object focal point with a shorter focal length than the first object focal point; and
a drive configured to change positional relationship between the first object focal point and the display relative to each other or between the second object focal point and the display relative to each other, the drive being configured to switch between a first positioning and a second positioning, the first positioning being positioning with the display located closer to the imaging optical system than the first object focal point of the imaging optical system to display a virtual image in air, the second positioning being positioning with the display located farther from the imaging optical system than the second object focal point of the imaging optical system to display a real image in air.

2. The aerial image display device according to claim 1, wherein
the imaging optical system is a reflective optical system or a catadioptric optical system.

3. The aerial image display device according to claim 2, wherein
the optical element is a freeform mirror, and
the imaging optical system switches between the first object focal point and the second object focal point in response to a position of the freeform mirror on which the traveling image light is incident.

4. The aerial image display device according to any one of claims 1 to 3, further comprising:
a controller configured to change an image to be displayed on the display.

5. The aerial image display device according to claim 4, wherein
the controller switches an up-down orientation of an image to be displayed on the display between an up-down orientation for the first positioning and an up-down orientation for the second positioning.

6. The aerial image display device according to claim 4 or claim 5, wherein
the controller switches a distortion correction table for an image to be displayed on the display between a distortion correction table for the first positioning and a distortion correction table for the second positioning.

7. The aerial image display device according to claim 4, wherein
the controller performs control to enlarge an image to be displayed on the display for displaying a virtual image in air relative to an image to be displayed on the display for displaying a real image in air.

8. The aerial image display device according to claim 4, wherein
the controller performs control to cause luminance of an image to be displayed on the display for displaying a virtual image in air to be higher than luminance of an image to be displayed on the display for displaying a real image in air.

9. The aerial image display device according to claim 4, wherein
the controller performs control to cause a contrast of an image to be displayed on the display for displaying a virtual image in air to be higher than a contrast of an image to be displayed on the display for displaying a real image in air.

10. The aerial image display device according to claim 4, wherein
the controller performs control to cause a frame frequency of an image to be displayed on the display for displaying a virtual image in air to be higher than a frame frequency of an image to be displayed on the display for displaying a real image in air.

11. The aerial image display device according to any one of claims 1 to 10, further comprising:
a camera configured to capture an image of a user,
wherein the controller changes an image to be displayed on the display based on a position of an eye of the user.

12. The aerial image display device according to claim 11, wherein
the camera captures an image of the user to obtain an image of a pupil of the eye of the user, and
the controller enlarges an image to be displayed on the display when the pupil enlarges.

13. The aerial image display device according to claim 11 or claim 12, wherein
the camera captures an image of the user to obtain an image of a pupil of the eye of the user, and
the controller increases luminance of an image to be displayed on the display when the pupil enlarges.

14. The aerial image display device according to any one of claims 11 to 13, wherein
the camera captures an image of the user to obtain an image of a pupil of the eye of the user, and
the controller increases a contrast of an image to be displayed on the display when the pupil enlarges.

15. The aerial image display device according to any one of claims 11 to 14, wherein
the camera captures an image of the user to obtain an image of a pupil of the eye of the user, and
the controller increases a frame frequency of an image to be displayed on the display when the pupil enlarges.
